(19) Europäisches Patentamt
European Patent Office
Office européen des brevets

(11) EP 2 559 788 B1

(12) **EUROPEAN PATENT SPECIFICATION**

(45) Date of publication and mention of the grant of the patent:
**14.10.2015 Bulletin 2015/42**

(21) Application number: **11768963.8**

(22) Date of filing: **15.04.2011**

(51) Int Cl.:
***C25B 3/04*** *(2006.01)* ***C07F 9/50*** *(2006.01)*

(86) International application number:
**PCT/JP2011/059414**

(87) International publication number:
**WO 2011/129442 (20.10.2011 Gazette 2011/42)**

# (54) METHOD FOR DIRECTLY PRODUCING PHOSPHINE DERIVATIVE FROM PHOSPHINE OXIDE DERIVATIVE

VERFAHREN ZUR DIREKTEN HERSTELLUNG EINES PHOSPHINDERIVATS AUS EINEM PHOSPHINOXIDDERIVAT

PROCÉDÉ DE PRODUCTION DIRECTE D'UN DÉRIVÉ DE PHOSPHINE À PARTIR D'UN DÉRIVÉ D'OXYDE DE PHOSPHINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.04.2010 JP 2010094731**

(43) Date of publication of application:
**20.02.2013 Bulletin 2013/08**

(73) Proprietor: **National University Corporation Okayama University**
**Okayama-shi, Okayama 700-8530 (JP)**

(72) Inventors:
- **KAWAKUBO Hiromu**
  **Tokyo 101-8101 (JP)**
- **TANAKA Hideo**
  **Okayama-shi**
  **Okayama 700-8530 (JP)**
- **KUROBOSHI Manabu**
  **Okayama-shi**
  **Okayama 700-8530 (JP)**
- **YANO Tomotake**
  **Okayama-shi**
  **Okayama 700-8530 (JP)**

(74) Representative: **Hoffmann Eitle**
**Patent- und Rechtsanwälte PartmbB**
**Arabellastraße 30**
**81925 München (DE)**

(56) References cited:
**WO-A1-2009/139436 JP-A- 7 076 592**
**JP-A- 8 048 692 JP-A- 63 137 188**

- **HIDEO TANAKA ET AL: "TMSCl-Promoted Electroreduction of Triphenylphosphine Oxide to Triphenylphosphine", SYNLETT, vol. 2011, no. 04, 8 February 2011 (2011-02-08), pages 582-584, XP055093538, ISSN: 0936-5214, DOI: 10.1055/s-0030-1259529**
- **HIROMU KAWAKUBO ET AL: "Electroreduction of Triphenylphosphine Oxide to Triphenylphosphine in the Presence of Chlorotrimethylsilane", SYNTHESIS, vol. 2011, no. 24, 18 December 2011 (2011-12-18), pages 4091-4098, XP055093646, ISSN: 0039-7881, DOI: 10.1055/s-0031-1289612**
- **JEAN-LUC LECAT ET AL: "Regeneration electrochimique de la triphenylphosphine", TETRAHEDRON LETTERS, vol. 28, no. 47, 1 January 1987 (1987-01-01), pages 5821-5822, XP055093604, ISSN: 0040-4039, DOI: 10.1016/S0040-4039(01)81063-7**
- **V. V. Yanilikin ET AL: "Electrochemical deoxygenation of triphenylphosphine oxide", Russian Chemical Bulletin, 1 May 1996 (1996-05-01), pages 1257-1258, XP055093613, DOI: 10.1007/BF01431641 Retrieved from the Internet: URL:http://www.springerlink.com/index/RN74 4527X437770N.pdf [retrieved on 2013-12-16]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

[Technical Field]

The present invention relates to a process for production of a phosphine derivative represented by the following formula (2) characterized by subjecting a phosphine oxide derivative represented by the following formula (1) to electrolytic reduction reaction using a trialkylsilyl halide in the presence of a supporting electrolyte in a polar organic solvent.

$$Ar_nR_{3-n}P{=}O \qquad (1)$$

$$Ar_nR_{3-n}P \qquad (2)$$

In the above formulas (1) and (2), Ar represents an aryl group such as a phenyl group, a substituted phenyl group, a heteroaromatic ring group, and a substituted heteroaromatic ring group, R represents an aliphatic hydrocarbon group or a substituted aliphatic hydrocarbon group, and n represents an integer of 0-3.

Background Art

The phosphine derivative involved in the present invention is an important reagent widely used in organic synthesis reactions such as Wittig reaction or Mitsunobu reaction. In these reactions, phosphine oxide derivatives are produced as side products, which are stored as wasted products hard to be treated in a large amount at storage places, etc. If these wasted products can be reduced in an appropriate method to convert it to phosphine derivatives, the reagent can be regenerated and recycled for reuse and thus the problem of the treatment of the above hard-to-be-treated wasted products will be solved once for all.

As reactions to convert a triphenylphosphine oxide derivative to a triphenylphosphine derivative, there are reported a reaction using trichlorosilane represented by the following formula (3) (Non-Patent Literature 1), a reaction using triethoxysilane or polymethylhydrosiloxane represented by the following formula (4) (Non-Patent Literature 2), a reaction using lithium aluminum hydride and cerium chloride represented by the formula (5) (Non-Patent Literature 3), a reaction using lithium aluminum hydride represented by the formula (6) (Non-Patent Literature 4), a reaction using a metal hydride such as alane represented by the formula (7) (Non-Patent Literature 5). Ph represents a phenyl group, Et represents an ethyl group, i-Pr represents an isopropyl group, THF represents tetrahydrofurane, and Me represents a methyl group, unless otherwise stated below.

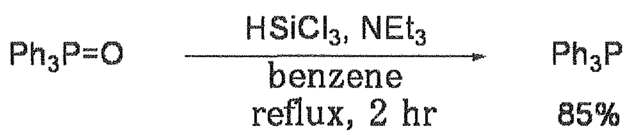


(3)

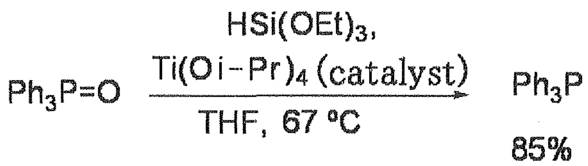


(4)

$(Me_3SiO[MeHSiO]_nSiMe_3$: 93%)

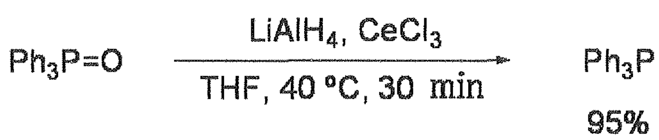


(5)

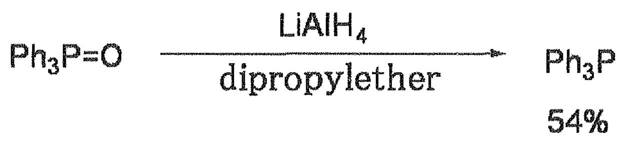

(6)

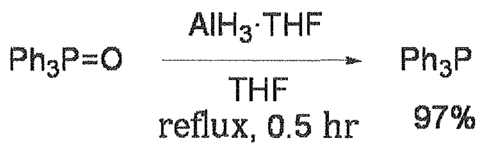

(7)

However, all of these metal hydrides are expensive and dangerous because of their inflammable property, so that extra care should be taken to handle them. Therefore, in order to treat a large amount of triphenylphosphine oxide derivatives, there are problems in view of costs, complication of handling, and the like.

Besides, as reduction reactions of triphenylphosphine oxide, there are reported a reaction reacting metal magnesium and titanocene dichloride represented by the following formula (8) (Non-Patent Literature 6), a reaction reacting samarium iodide represented by the following formula (9) (Non-Patent Literature 7), a reaction reacting active carbon and a hydrocarbon represented by the following formula (10) (Patent Literature 1), a reaction reacting a reducing agent prepared from a bismuth oxide and a titanium oxide represented by the following formula (11) (Patent Literature 2), a reaction reacting light in the presence of a titanium oxide represented by the following formula (12) (Non-Patent Literature 8), a reaction reacting silicon powder, chlorosilane and iron chloride represented by the following formula (13) (Patent Literature 3). However, these reactions are hardly suited for practical method for production of triphenylphosphine in view of costs and safety. Cp represents a cyclopentadienyl group, HMPA represents hexamethylphosphoramide, DMF represents dimethylformamide, tBu represents a tertiary butyl group, Bu represents a butyl group, Ts represents a tosyl group, and TsO- represents a tosylate anion, unless otherwise stated below.

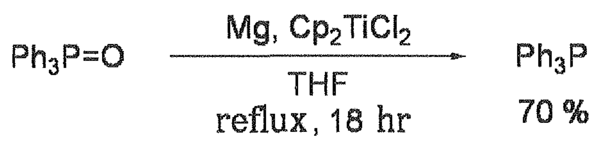

(8)

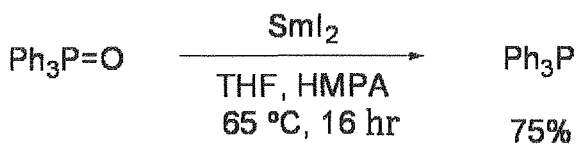

(9)

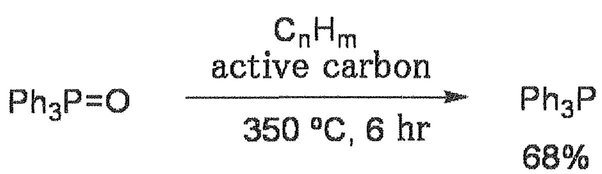

(10)

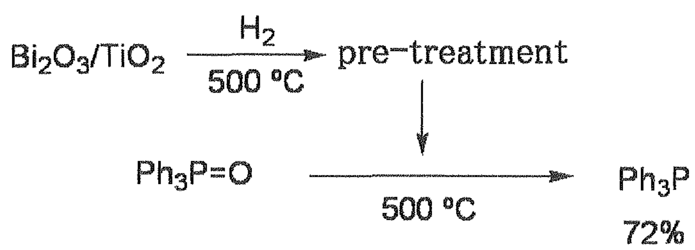

(11)

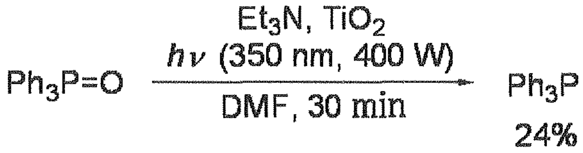

(12)

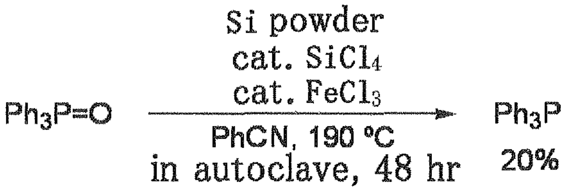

(13)

Also, a reaction represented by the following formula (14) is reported about electrolytic reduction of triphenylphosphine oxide (Patent Literature 4).

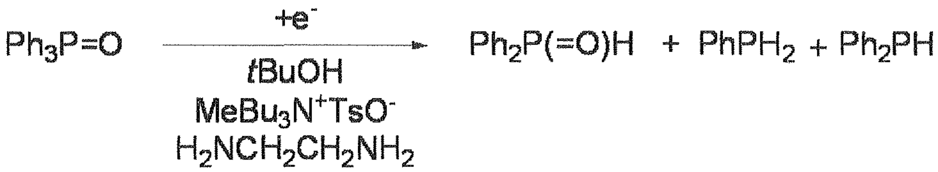

(14)

However, the resulting product is a complicated mixture of diphenylphosphine oxide, phenylphosphine, diphenylphosphine and besides, benzene, cyclohexadiene, cyclohexene and the like, and contains completely no triphenylphospine.

There have been further reports of a process for producing triphenylphosphine by carrying out electrolytic reduction of triphenylphosphine oxide represented by the following formula (15) using aluminum as anode in the presence of aluminum chloride in acetonitrile to produce triphenylphosphine (Patent Literature 5 and Non-Patent Literature 9), a process for producing triphenylphosphine by treating a triphenylphosphine oxide derivative represented by the following formula (16) with phosphorus pentasulfide and dimethyl sulfate, followed by carrying out electrolytic reduction of it in methanol containing lithium chloride to produce triphenylphosphine, a process for producing triphenylphosphine by treating it with methyl trifluoromethanesulfonate ester, followed by carrying out electrolytic reduction in methanol containing tetrabutylammonium trifluoromethanesulfonate (Non-Patent Literature 10). However, in the above reaction of the formula (15), the yield of triphenylphosphine is only 11% and current efficiency is 8% or less, which are totally not practical. In the above reaction of the formula (16), the preparation of a pentavalent phosphorus compound to be supplied to electrolysis requires complicated operations, and as a result the yield through all steps including electrolytic reduction is about 45% at most, which are not practically satisfactory. Tf represents a trifluoromethylsulfonyl group, X represents a halogen group, DME represents 1,2-dimethoxyethane, Ms represents a mesyl group and MsO- represents a mesylate anion, unless otherwise stated below.

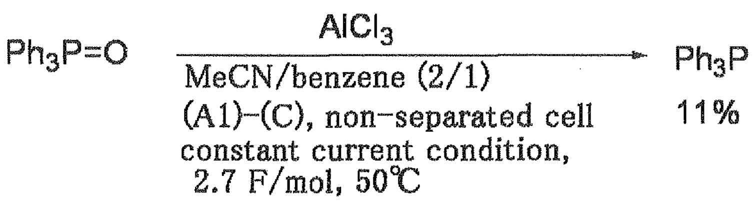

(15)

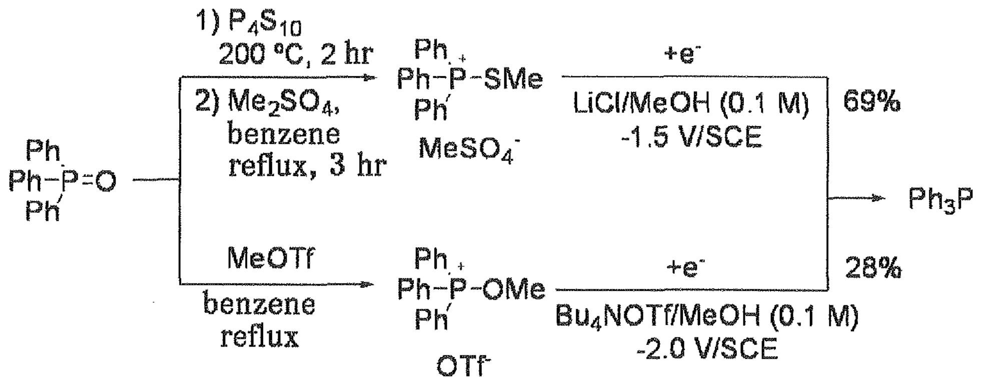

(16)

The reaction of the following formula (17), on the other hand, is reported as a two-step process for once converting triphenylphosphine oxide to another pentavalent phosphorus compound and then reducing it to convert it to triphenylphosphine (Non-Patent Literature 11). However, expensive lithium aluminum hydride is used in the two-step reduction reaction, which is not practical.

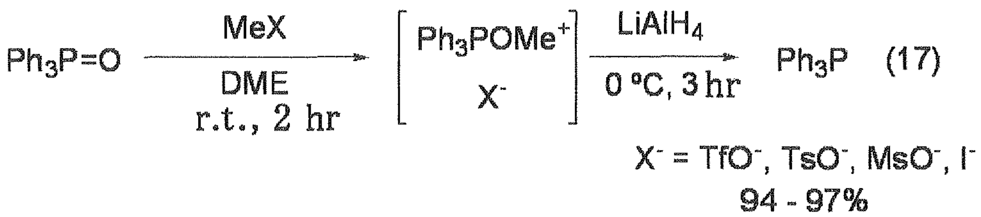

(17)

There is reported a process for synthesizing triphenylphosphine represented by the following formula (2a) (Ar being a phenyl group) in a high yield by a reaction represented by the following formula (19) of reacting a pentavalent phosphorus compound represented by the following formula (18) (Ar being a phenyl group and X being chlorine), which is prepared from triphenylphosphine oxide represented by the following formula (1a) (Ar being a phenyl group), with lithium aluminum hydride or metal sodium (Non-Patent Literature 12).

$$Ar_3P{=}O \qquad (1a)$$

$$Ar_3P \qquad (2a)$$

$$Ar_3PX_2 \qquad (18)$$

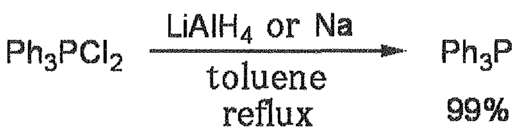

(19)

However, this reaction has a risk of inflammation, etc. and uses lithium aluminum hydride or metal sodium, which extra care should be taken to treat, so that it is problematic for practical process for treating a large amount of triphenylphosphine oxide.

As other processes for synthesizing triphenylphosphine represented by the following formula (2a) from a pentavalent phosphorus compound represented by the following formula (18) (Ar being a phenyl group and X being chlorine), there are reported a process of reacting thiophenol represented by the following formula (20) (Non-Patent Literature 13), a process of reacting butyllithium represented by the following formula (21) (Non-Patent Literature 14), a process of reacting phenylmagnesium bromide represented by the following formula (22) (Non-Patent Literature 14), a process of reacting white phosphorus represented by the following formula (23) (Patent Literature 6), a process of reacting silicon powder represented by the following formula (24) (Patent Literature 7), a process of reacting iron powder represented by the following formula (25) (Patent Literature 8), a process of reacting metal sodium and phosphorus trichloride represented by the following formula (26) (Patent Literature 9), or a process of hydrogenation reactions represented by the following formulas (27)-(32) (Patent Literatures 10-14). However, these processes all require expensive reagents in excess amounts or severe reaction conditions under high temperatures or high pressures, and thus are not practically satisfactory as reduction method of a pentavalent phosphorus compound represented by the following formula (18).

$$Ar_3P \qquad (2a)$$

$$Ar_3PX_2 \qquad (18)$$

$$Ph_3PCl_2 \xrightarrow[\text{benzene, r.t.}]{PhSH,\ NEt_3} Ph_3P\ \ 87\% \qquad (20)$$

$$Ph_3PCl_2 \xrightarrow[\text{hexane, reflux, 2 hr}]{BuLi} Ph_3P\ \ 75\% \qquad (21)$$

$$Ph_3PCl_2 \xrightarrow[\text{diethylether, reflux, 2 hr}]{PhMgBr} Ph_3P\ \ 91\% \qquad (22)$$

$$Ph_3PCl_2 \xrightarrow[CHCl_3,\ 180\ ^{\circ}C,\ 1.5\ hr]{\text{white phosphorus}} Ph_3P\ \ 64\% \qquad (23)$$

$$Ph_3PCl_2 \xrightarrow[o\text{-}C_6H_4Cl_2,\ 165\ ^{\circ}C,\ 4\ hr]{\text{Si powder}} Ph_3P\ \ 99\% \qquad (24)$$

$$Ph_3PCl_2 \xrightarrow[o\text{-}C_6H_4Cl_2,\ \text{reflux, 2 hr}]{\text{Fe powder}} Ph_3P\ \ 94\% \qquad (25)$$

$$Ph_3PCl_2 \xrightarrow[\text{toluene, PhCl, 60 °C, 2 hr}]{Na,\ PCl_3} Ph_3P\ \ 96\% \qquad (26)$$

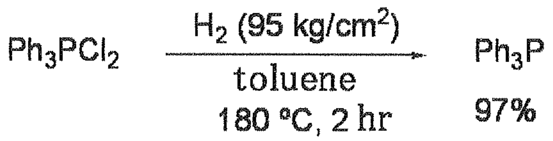


(27)

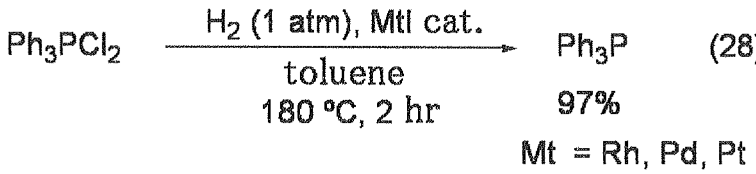


(28)

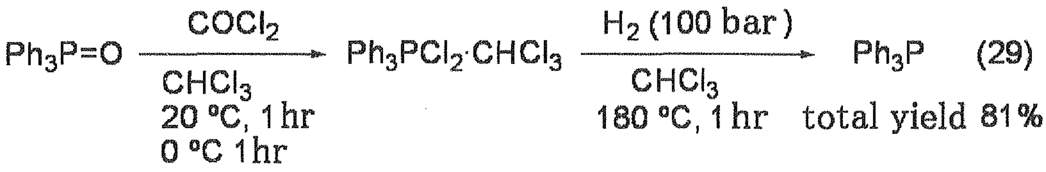


(29)

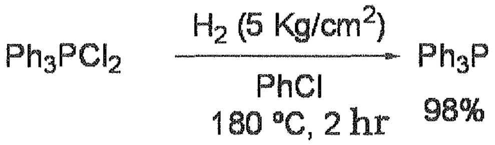


(30)

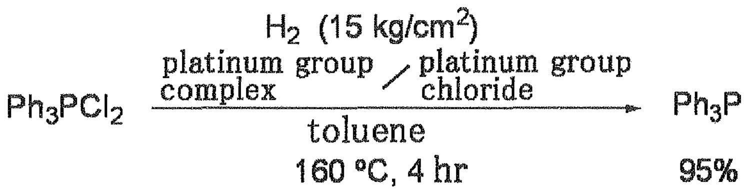


(31)

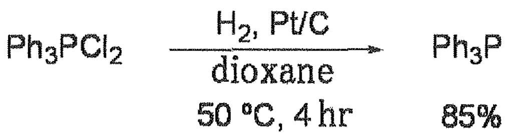


(32)

Also reported is a process for synthesizing triphenylphosphine represented by the following formula (2a) (Ar being a phenyl group) in a good yield by the reactions shown in the following formulas (33) to (35) in which a metal aluminum is reacted with a pentavalent phosphorus compound represented by the following formula (18) (Ar being a phenyl group and X being chlorine), which is prepared from triphenylphosphine oxide represented by the following formula (1a) (Ar being a phenyl group) (Patent Literatures 15-17). However, these processes are all performed under high temperature conditions of 90-180°C often in a long period of time of several hours to twenty hours. Aluminum to be used is preferably in the form of powder, and advantageously used after being sieved in an appropriate particle size range (200 to 500 μm). However, powdery aluminum requires not only cost in the adjustment of its particle size but also extra care to handle due to its inflammable property. The pentavalent phosphorus compound represented by the formula (18) (Ar being a phenyl group and X being chlorine) to be supplied to the reaction is prepared by reacting triphenylphosphine oxide with a chlorinating agent such as phosgene, but usually requires separation and purification steps after the reaction. Therefore, it is necessary to reduce the chlorinating agent and chlorides as side products below a given acceptable limit. The described processes for the preparation of a pentavalent phosphorus compound represented by the following formula (18) (Ar being a phenyl group and X being chlorine) from a phosphine oxide derivative and the production of a phosphine derivative by reduction with metal aluminum are not satisfactory as a practical process. There is still a need for the development of production process suited for industrial feasibility.

$$Ar_3P=O \quad (1a)$$

$$Ar_3P \quad (2a)$$

$$Ar_3PX_2 \quad (18)$$

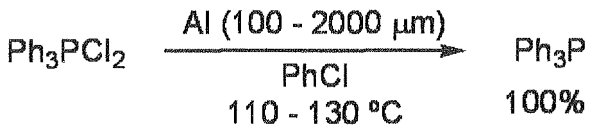


(33)

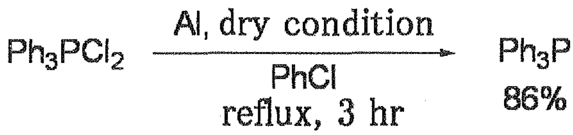


(34)

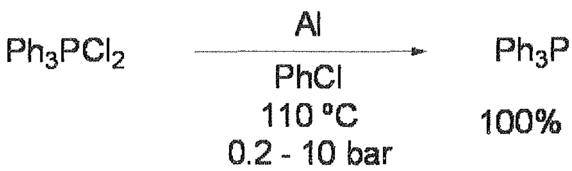


(35)

There is a report of a process for synthesizing a triphenylphosphine derivative represented by the following formula (2) (Ar being a phenyl group) in a good yield by the reaction shown in the following formula (36) which metal aluminum is reacted with a pentavalent phosphorus compound represented by the following formula (18) (Ar being a phenyl group and X being chlorine), which is prepared from triphenylphosphine oxide represented by the following formula (1) (Ar being a phenyl group) (Patent Literature 18). However, this process requires two steps and there is a need for the development of more industrially suitable production process.

$$Ar_nR_{3-n}P=O \quad (1)$$

$$Ar_nR_{3-n}P \quad (2)$$

$$Ar_3PX_2 \quad (18)$$

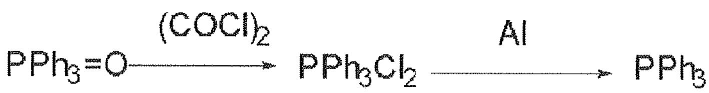


(36)

[Prior Art Literature]

[Patent Literature]

[Patent Literature 1] JP-A-62-4294
[Patent Literature2] JP-A-8-225468

[Patent Literature3] EP0548682, US5792884
[Patent Literature4] WO2005/031040A2
[Patent Literature5] Indian Pat. Appl. 2002, DE00793
[Patent Literature6] US3481988, DE1247310
[Patent Literature7] US5792884, EP548682
[Patent Literature8] US3780111
[Patent Literature9] US4036889, DE-2638720
[Patent Literature10] JP-A-53-34725
[Patent Literature11] JP-A-55-149293
[Patent Literature12] JP-B-63-26115
[Patent Literature 13] JP-A-55-149294
[Patent Literature14] JP-B-62-56879
[Patent Literature15] JP-A-7-76592
[Patent Literature16] US3405180
[Patent Literature17] EP0761676, DE19532310
[Patent Literature18] WO2009/139436

[Non-Patent Literature]

[Non-Patent Literature1] Fritzsche, H.;Hasserodt, U.;Korte, F.;Friese, G;Adrian, K., Chem.Ber.1965, 98, 171-174
[Non-Patent Literature2] Coumbe, T.;Lawrence, N.J.;Muhammad, F., Tetrahedron Lett. 1994, 35, 625-628
[Non-Patent Literature3] Imamoto, T.;Takeyama, T.;Kusumoto, T., Chem.Lett.1985, 1491-1492
[Non-Patent Literature4] Issleib,K.;Grams,G, Zeitschrift fur Anorganishe und Allgemeine Chemie 1959, 299, 58-68
[Non-Patent Literature5] Griffin, S.;Heath, L.;Wyatt, P., Tetrahedron Lett.1998, 39, 4405-4406
[Non-Patent Literature6] Mathey, F.;Maillet, R., Tetrahedron Lett.1980, 21, 2525-2526
[Non-Patent Literature7] Handa, Y.;Inanaga.J.;Yamaguchi, M., J.Chem.Soc.;Chem.Comm.1989, 298-299
[Non-Patent Literature8] Somasundaram, N.;Srinivasan, C., J.Org.Chem.1996, 61, 2895-2896
[Non-Patent Literature9] Yanilkin, V.V;Gromakov, V.S.;Nigmadzyanov, F.F.Russ., Chem.Bull.1996, 45, 1257-1258
[Non-Patent Literature10] Lecat, J.L.;Devaud, M., Tetrahedron Lett.1987, 28, 5821-5822
[Non-Patent Literature11] Imamoto, T.;Kikuchi, S.;Miura, T.;Wada, Y, Org.Lett.2001, 3, 87-90
[Non-Patent Literature12] Horner, L.;Hoffman, H.;Beck, P., Chem.Ber., 1958, 91, 1583-1588
[Non-Patent Literature13] Masaki, M.;Fukui, K., Chem.Lett.1977, 151-152
[Non-Patent Literature14] Denney, D.B.;Gross, F.J.J., Org.Chem.1967, 32, 3710-3711

Summary of the Invention

Problems to be Solved by the Invention

There has been a need for the established process for the production of a phosphine derivative comprising converting a phosphine oxide derivative represented by the following formula (1) to a phosphine derivative represented by the following formula (2) in a high yield in a high selectivity by conducting reduction in a concise manner at low cost and low risk and under mild conditions, i.e. a process for regenerating a phosphine derivative from the resulting phosphine oxide derivative obtained as a side product.

$$Ar_nR_{3-n}P{=}O \qquad (1)$$

$$Ar_nR_{3-n}P \qquad (2)$$

In the above formulas (1) and (2), Ar represents an aryl group such as a phenyl group, a substituted phenyl group, a heteroaromatic ring group, and a substituted heteroaromatic ring group, R represents an aliphatic hydrocarbon group or a substituted aliphatic hydrocarbon group, and n represents an integer of 0-3.

Means for Solving the Problems

The present inventors eagerly studied about a process for converting a phosphine oxide derivative represented by the following formula (1) to a phosphine derivative represented by the following formula (2) in order to achieve the above-mentioned purpose. As a result, they succeeded in efficiently obtaining a phosphine derivative represented by the following formula (2) by subjecting a phosphine oxide derivative represented by the following formula (1) to electrolytic reduction reaction using a trialkylsilyl halide in the presence of a supporting electrolyte in a polar organic solvent, which is acetonitrile or a mixed solvent containing acetonitrile as the major solvent in each of both electrode chambers of a separate-type cell.

$$Ar_nR_{3-n}P{=}O \qquad (1)$$

$$Ar_nR_{3-n}P \qquad (2)$$

In the above formulas (1) and (2), Ar represents an aryl group such as a phenyl group, a substituted phenyl group, a heteroaromatic ring group, and a substituted heteroaromatic ring group, R represents an aliphatic hydrocarbon group or a substituted aliphatic hydrocarbon group, and n represents an integer of 0-3.
Accordingly, the present invention includes the following [1] to [9]:

[1] A process for production of a phosphine derivative represented by the following formula (2) characterized by subjecting a phosphine oxide derivative represented by the following formula (1) to electrolytic reduction reaction using a trialkylsilyl halide in the presence of a supporting electrolyte in a polar organic solvent, which is acetonitrile or a mixed solvent containing acetonitrile as the major solvent in each of both electrode chambers of a separate-type cell

$$Ar_nR_{3-n}P{=}O \qquad (1)$$

$$Ar_nR_{3-n}P \qquad (2)$$

wherein Ar represents an aryl group selected from the group consisting of a phenyl group, a substituted phenyl group, a heteroaromatic ring group, and a substituted heteroaromatic ring group, R represents an aliphatic hydrocarbon group or a substituted aliphatic hydrocarbon group, and n represents an integer of 0-3.

[2] The process according to [1], wherein said trialkylsilyl halide is selected from the group consisting of trimethylsilyl chloride, triethylsilyl chloride, and tripropylsilyl chloride.

[3] The process according to [1] or [2], wherein said supporting electrolyte is a quaternary ammonium salt selected from the group consisting of tetrabutylammonium trifluoromethanesulfonate, tetraethylammonium p-toluenesulfonate, tetraethylammonium bromide, tetrabutylammonium bromide, tetrabutylammonium perchlorate, tetrabutylammonium tetrafluoroborate, and tetrabutylammonium hexafluorophosphate, or an alkali metal salt selected from the group consisting of lithium perchlorate, lithium hexafluorophosphate, and sodium tetrafluoroborate.

[4] The process according to any one of [1] to [3], wherein said electrolytic reduction reaction is carried out under constant current conditions.

[5] The process according to any one of [1] to [4], wherein said phosphine oxide derivative is used in an amount of 1 to 50% by mass based on said polar organic solvent.

[6] The process according to any one of [1] to [5], wherein said supporting electrolyte is used in an amount of 5 to 500% by mole based on the phosphine oxide derivative.

[9] The process according to any one of [1] to [6], wherein said electrolytic reduction reaction is carried out at a temperature of 0 to 50°C.

Advantages of the Invention

The process for production of the present invention need not use an expensive compound or a problematic compound in safety in the step of converting a phosphine oxide derivative to a phosphine derivative, and need not go through high pressures or high temperatures, so that it can industrially produce a phosphine derivative in inexpensive, safe, concise and short time manners.

The process for production of the present invention further is not vulnerable to a chlorinating agent or chloride as side product in a reduction reaction, and therefore can subject a reaction mixture produced in the chlorinating reaction as such to the reduction reaction without purification or isolation of triarylphosphine dichloride from the reaction mixture. Thus, the period of time for operation can be reduced and the yield can be increased.

Mode for Carrying Out the Invention

Below explained is a process for producing a phosphine derivative represented by the following formula (2) by reducing a phosphine oxide derivative represented by the following formula (1) using a trialkylsilyl halide in the presence of a supporting electrolyte in a polar organic solvent as defined above.

$$Ar_nR_{3-n}P{=}O \qquad (1)$$

$$Ar_nR_{3-n}P \qquad (2)$$

As used herein, the aryl group (Ar) of the phosphine oxide derivative of the formula (1) and the phosphine derivative of the formula (2) refers to a phenyl group, a substituted phenyl group, a heteroaromatic ring group and a substituted heteroaromatic ring group, but are not limited thereto. Examples of the aryl group include a phenyl group, a phenyl group having a substituent not vulnerable to chlorination/reduction conditions according to the present invention, as well as a heteroaromatic ring group such as 2-pyridyl group, 3-pyridyl group, 3-thienyl group, 2-furyl group, a substituted heteroaromatic ring group, etc. Examples of the substituent include p-methyl, p-methoxy, o-methyl, p-fluoro, p-chloro, p-phenyl, etc.

The aliphatic hydrocarbon group (R) refers to an aliphatic hydrocarbon group such as an alkyl group, an alkenyl group, an alkynyl group, and includes substituted ones thereof.

n is an integer of 0-3. In the present invention, triarylphosphine oxides (n=3) or diarylalkylphosphine oxides (n=2) are preferably used. Specifically, triphenylphosphine oxide, tri(p-tolyl)phosphine oxide, tri(m-tolyl)phosphine oxide, tri(o-tolyl)phosphine oxide, tri(p-methoxyphenyl)phosphine oxide, tri(p-chlorophenyl)phosphine oxide, tri(2-furyl)phosphine oxide, diphenylmethylphosphine oxide, diphenylethylphosphine oxide, diphenylbutylphosphine oxide are preferably used, and triphenylphosphine oxide is most preferably used.

As trialkylsilyl halides to be used in the present invention, trimethylsilyl chloride, triethylsilyl chloride, tripropylsilyl chloride and the like are used, among which trimethylsilyl chloride is preferably used.

First, a supporting electrolyte is added to a polar organic solvent. Examples of the supporting electrolyte to be added are not limited as far as it is ionized in the polar organic solvent, and include quaternary ammonium salts such as tetrabutylammonium trifluoromethanesulfonate ($Bu_4NOTf$), tetraethylammonium p-toluenesulfonate ($Et_4NOTs$), tetraethylammonium bromide ($Et_4NBr$), tetrabutylammonium bromide ($Bu_4NBr$), tetrabutylammonium perchlorate ($Bu_4NClO_4$), tetrabutylammonium tetrafluoroborate ($Bu_4NBF_4$), tetrabutylammonium hexafluorophosphate ($Bu_4NPF_6$) or alkali metal salts such as lithium perchlorate ($LiClO_4$), lithium hexafluorophosphate ($LiPF_6$), sodium tetrafluoroborate ($NaBF_4$).

Acetonitrile or a mixed solvent containing acetonitrile as the major solvent is used. As a solvent to be used for the mixed solvent with acetonitrile, organic solvents such as N,N-dimethylformamide, N-methylpiperidone, pyridine, tetrahydrofuran, dioxane, benzene, chlorobenzene, toluene, dichloromethane, chloroform, acetone, ethyl methyl ketone, diethyl ether and the like are mentioned. The ratio of acetonitrile and an organic solvent to be added in the mixed solvent is preferably 1:0.3 to 1:0.001, more preferably 1:0.1 to 1:0.01.

The amount of the supporting electrolyte to be used this time is preferably 5-50 % by mass, more preferably 5-20% by mass based on the polar organic solvent. The supporting electrolyte is used preferably in an amount of 5-500% by mole, more preferably in an amount of 80-450% by mole based on the phosphine oxide derivative (for example, a triarylphosphine oxide derivative). When the amount of the supporting electrolyte added is 5% by mole or more based on the phosphine oxide derivative, the current efficiency does not decrease. On the other hand, when it is 500% by mole or less, stirring does not become difficult.

This mixed solution is added in amounts of 1/2 and 1/2 in each of both electrode chambers of a separate-type cell. To the cathode chamber, a phosphine oxide derivative is added in an amount of 1-50% by mass, more preferably 1-20% by mass based on the polar organic solvent. When the added amount is 1% by mass or more, the current efficiency does not decrease, and on the other hand, when it is 50% by mass or less, stirring does not become difficult. This solution is put under argon atmosphere. The reaction mixture is stirred at room temperature for 1-30 minutes, preferably for 5 to 15 minutes.

Thereafter, electrolytic reduction reaction is carried out preferably at a temperature of 0-50°C. A current is conducted in an amount of 2-10F, preferably 2-4F per 1 mole of phosphine oxide derivative under constant current conditions. Electrolysis is carried out with current density constantly kept to 1 to 500 $mA/cm^2$, preferably 10-100 $mA/cm^2$. 1 F is equivalent to 96500 coulomb.

The resulting reaction mixture of the reduction reaction produces a phosphine derivative through separation and purification of the product by conventional known methods such as solvent extraction, recrystallization and the like. The reaction mixture contains impurities, which need be removed by purification. The impurities content of phosphine derivative after purification is preferably 10 ppm or less, more preferably 1 ppm or less. Examples

The present invention is described below by referring to Examples but should not be restricted by these Examples.

Example 1

Tetrabutylammonium trifluoromethanesulfonate (Bu4NOTf 0.7854g, 2.01mmol) was dissolved in acetonitrile (10 ml). This solution was put in an amount of 5 ml in each of both electrode chambers of a separate-type cell installed with a platinum electrode (1.5 x 1.0 $cm^2$) each at an anode and at a cathode. Further, in the cathode chamber, triphenylphosphine oxide ($Ph_3PO$, 0.1402g, 0.504mmol) and trimethylsilyl chloride ($Me_3SiCl$, 0.78mL, 0.67g, 6.2mmol) were put. The reaction solution was stirred for 10 minutes at room temperature under argon atmosphere, followed by constant-current electrolysis (25mA, 64.3 minutes, 2F/mol-$Ph_3PO$) at room temperature. The solution in the cathode chamber was poured into a mixture of 5% hydrochloric acid and ice and extracted three times with ethyl acetate (15 ml). Organic layers were collected together and washed with 10 ml of aqueous saturated sodium hydrogencarbonate and 10 ml of saturated aqueous sodium chloride sequentially, followed by drying on anhydrous sodium sulfate. The organic layer is filtered and evaporated under reduced pressure and thereafter the residual was purified by silica gel column chromatography ($SiO_2$ 50 g, hexane to hexane/ethyl acetate 3/1, Rf= 0.73) to isolate triphenylphosphine (0.127g, 0.484mmol,96%), the desired product. Triphenylphosphine oxide , the starting material, was also recovered (2.8 mg, 0.01 mmol, recovery rate 2%). The result is shown in Table 1.

Example 2

The reduction reaction from triphenylphosphine oxide to triphenylphosphine was carried out according to the same procedures and under the same reaction conditions as Example 1, except that trimethylsilyl chloride was used in an amount shown in Table 1. The result is shown in Table 1.

Comparative Example 1

The reduction reaction from triphenylphosphine oxide to triphenylphosphine was carried out according to the same procedures and under the same reaction conditions as Example 2, except that trimethylsilyl chloride was replaced with trimethylsilyl triflate ($Me_3SiOTf$).

Yield was calculated from isolated amount after purification by silica gel column chromatography. The result is shown in Table 1.

Table 1

| | Silyl compound | Triphenylphosphine oxide:silyl compound (mol ratio) | Yield (%) | |
|---|---|---|---|---|
| | | | Triphenylphosphine | Starting material (recovery rate) |
| Example 1 | $Me_3SiCl$ | 1 : 12 | 96 | 2 |
| Example 2 | $Me_3SiCl$ | 1 : 2 | 60 | 38 |

(continued)

| | Silyl compound | Triphenylphosphine oxide:silyl compound (mol ratio) | Yield (%) | |
|---|---|---|---|---|
| | | | Triphenylphosphine | Starting material (recovery rate) |
| Com. Example 1 | $Me_3SiOTf$ | 1 : 2 | 35 | 63 |

Example 3

To a solution of tetrabutylammonium bromide ($Bu_4NBr$, 0.645g, 2.0mmol) in acetonitrile (5 ml), triphenylphosphine oxide ($Ph_3PO$, 0.557g, 2.0mmol) and trimethylsilyl chloride ($Me_3SiCl$, 0.78mL, 0.67g, 6.2mmol) were added and stirred for 10 minutes to make a homogeneous solution. Thereto, a zinc electrode as anode ($1.5\times1.0$ $cm^2$) and a copper electrode as cathode ($1.5\times1.0$ $cm^2$) were attached. Constant-current electrolysis (100mA, 128.7 minutes, 4F/mol-$Ph_3PO$) was conducted while heating by immersing an electrolysis trough in an oil bath of 45°C under argon atmosphere. The electrolysis solution was poured into a mixture of 5% hydrochloric acid and ice and extracted three times with ethyl acetate (30 ml). Organic layers were collected together and washed with 10 ml of aqueous saturated sodium hydrogencarbonate and 10 ml of saturated aqueous sodium chloride sequentially, followed by drying on anhydrous sodium sulfate. The organic layer is filtered and evaporated under reduced pressure and thereafter the residual was purified by silica gel column chromatography (hexane to hexane/ethyl acetate 3/1) to isolate triphenylphosphine (0.509 g, 1.94 mmol, 97%), the desired product. Triphenylphosphine oxide, the starting material, was also recovered (5.6 mg, 0.02 mmol, recovery rate 1%). The result is shown in Table 2.

Examples 4-7

The reduction reaction from phosphine oxide to phosphine was carried out according to the same procedures and under the same reaction conditions as Example 3, except that triphenylphosphine oxide was replaced with phosphine oxide (2.0 mmol) as shown in Table 2. The result is shown in Table 2.

Table 2

| | Phosphine oxide | Yield (%) | |
|---|---|---|---|
| | | Phosphine | Starting material (recovery rate) |
| Example 3 | $Ph_3PO$ | 97 | 1 |
| Example 4 | $(m\text{-tolyl})_3PO$ | 92 | 5 |
| Example 5 | $(p\text{-tolyl})_3PO$ | 82 | 11 |
| Example 6 | $(p\text{-}MeOC_6H_4)_3PO$ | 93 | 3 |
| Example 7 | $BuPh_2PO$ | 82 | 7 |

[Industrial Applicability]

The technology of the present invention can be preferably utilized in the field of pharmaceutical and chemical industries.

## Claims

**1.** A process for production of a phosphine derivative represented by the following formula (2) **characterized by** subjecting a phosphine oxide derivative represented by the following formula (1) to electrolytic reduction reaction using a trialkylsilyl halide in the presence of a supporting electrolyte in a polar organic solvent, which is acetonitrile or a mixed solvent containing acetonitrile as the major solvent in each of both electrode chambers of a separate-type cell

$$Ar_nR_{3-n}P{=}O \qquad (1)$$

$$Ar_nR_{3-n}P \qquad (2)$$

wherein Ar represents an aryl group selected from the group consisting of a phenyl group, a substituted phenyl group, a heteroaromatic ring group, and a substituted heteroaromatic ring group, R represents an aliphatic hydrocarbon group or a substituted aliphatic hydrocarbon group, and n represents an integer of 0-3.

2. The process according to claim 1, wherein said trialkylsilyl halide is selected from the group consisting of trimethylsilyl chloride, triethylsilyl chloride, and tripropylsilyl chloride.

3. The process according to claim 1 or 2, wherein said supporting electrolyte is a quaternary ammonium salt selected from the group consisting of tetrabutylammonium trifluoromethanesulfonate, tetraethylammonium p-toluenesulfonate, tetraethylammonium bromide, tetrabutylammonium bromide, tetrabutylammonium perchlorate, tetrabutylammonium tetrafluoroborate, and tetrabutylammonium hexafluorophosphate, or an alkali metal salt selected from the group consisting of lithium perchlorate, lithium hexafluorophosphate, and sodium tetrafluoroborate.

4. The process according to any one of claims 1 to 3, wherein said electrolytic reduction reaction is under constant current conditions.

5. The process according to any one of claims 1 to 4, wherein said phosphine oxide derivative is used in an amount of 1 to 50% by mass based on said polar organic solvent.

6. The process according to any one of claims1 to 5, wherein said supporting electrolyte is used in an amount of 5 to 500% by mole based on the phosphine oxide derivative.

7. The process according to any one of claims 1 to 6, wherein said electrolytic reduction reaction is carried out at a temperature of 0 to 50°C.

**Patentansprüche**

1. Verfahren zur Erzeugung eines Phosphinderivates, dargestellt durch folgende Formel (2), **gekennzeichnet durch** Durchführen einer elektrolytischen Reduktionsreaktion mit einem Phosphinoxidderivat, dargestellt **durch** folgende Formel (1), unter Verwendung eines Trialkylsilylhalogenides in der Gegenwart eines unterstützenden Elektrolyten in einem polaren organischen Lösungsmittel, das Acetonitril oder ein gemischtes Lösungsmittel ist, umfassend Acetonitril als Hauptlösungsmittel, in jeder von beiden Elektrodenkammern einer Zelle vom getrennten Typ

$$Ar_nR_{3-n}P{=}O \qquad (1)$$

$$Ar_nR_{3-n}P \qquad (2)$$

worin Ar eine Arylgruppe ist, ausgewählt aus der Gruppe bestehend aus einer Phenylgruppe, einer substituierten Phenylgruppe, heteroaromatischen Ringgruppe und substituierten heteroaromatischen Ringgruppe, R eine aliphatische Kohlenwasserstoffgruppe oder substituierte aliphatische Kohlenwasserstoffgruppe ist und n eine ganze Zahl von 0 bis 3 ist.

2. Verfahren gemäß Anspruch 1, worin das Trialkylsilylhalogenid ausgewählt ist aus der Gruppe bestehend aus Trimethylsilylchlorid, Triethylsilylchlorid und Tripropylsilylchlorid.

3. Verfahren gemäß Anspruch 1 oder 2, worin der tragende Elektrolyt ein quaternäres Ammoniumsalz ist, ausgewählt aus der Gruppe bestehend aus Tetrabutylammoniumtrifluormethansulfonat, Tetraethylammonium-p-toluolsulfonat,

Tetraethylammoniumbromid, Tetrabutylammoniumbromid, Tetrabutylammoniumperchlorat, Tetrabutylammoniumtetrafluorborat und Tetrabutylammoniumhexafluorphosphat oder ein Alkalimetallsalz, ausgewählt aus der Gruppe bestehend aus Lithiumperchlorat, Lithiumhexafluorphosphat und Natriumtetrafluorborat.

**4.** Verfahren gemäß einem der Ansprüche 1 bis 3, worin die elektrolytische Reduktionsreaktion unter konstanten Strombedingungen durchgeführt wird.

**5.** Verfahren gemäß einem der Ansprüche 1 bis 4, worin das Phosphinoxidderivat in einer Menge von 1 bis 50 Masse% verwendet wird, bezogen auf das polare organische Lösungsmittel.

**6.** Verfahren gemäß einem der Ansprüche 1 bis 5, worin der tragende Elektrolyt in einer Menge von 5 bis 500 mol% verwendet wird, bezogen auf das Phosphinoxidderivat.

**7.** Verfahren gemäß einem der Ansprüche 1 bis 6, worin die elektrolytische Reduktionsreaktion bei einer Temperatur von 0 bis 50°C durchgeführt wird.

## Revendications

**1.** Procédé de production d'un dérivé de phosphine représenté par la formula (2) suivante **caractérisé en ce que** un dérivé d'oxyde de phosphine représenté par la formule (1) suivante est soumis à une réaction de réduction électrolytique en utilisant un halogénure de trialkylsilyle en présence d'un électrolyte de base dans un solvant organique polaire, qui est l'acétonitrile ou un solvant mélangé contenant de l'acétonitrile en tant que solvant principal dans chacune des deux chambres d'électrode d'une cellule de type séparé

$$Ar_nR_{3-n}P{=}O \qquad (1)$$

$$Ar_nR_{3-n}P \qquad (2)$$

dans lesquelles Ar représente un groupe aryle choisi parmi le groupe constitué d'un groupe phényle, un groupe phényle substitué, un groupe cyclique hétéroaromatique, et un groupe cyclique hétéroaromatique substitué, R représente un groupe hydrocarboné aliphatique ou un groupe hydrocarboné aliphatique substitué, et n représente un entier de 0-3.

**2.** Le procédé selon la revendication 1, dans lequel ledit halogénure de trialkylsilyle est choisi parmi le groupe constitué du chlorure de triméthylsilyle, du chlorure de triéthylsilyle, et du chlorure de tripropylsilyle.

**3.** La procédé selon la revendication 1 ou 2, dans lequel ledit électrolyte de base est un sel d'ammonium quaternaire choisi parmi le groupe constitué du trifluorométhanesulfonate de tétrabutylammonium, du p-toluènesulfonate de tétraéthylammonium, du bromure de tétraéthylammonium, du bromure de tétrabutylammonium, du perchlorate de tétrabutylammonium, du tétrafluoroborate de tétrabutylammonium, et de l'hexafluorophosphate de tétrabutylammonium, ou un sel métallique alcalin choisi parmi le groupe constitué du perchlorate de lithium, de l'hexafluorophosphate de lithium, et du tétrafluoroborate de sodium.

**4.** Le procédé selon l'une quelconque des revendications 1 à 3, dans lequel ladite réaction de réduction électrolytique est dans des conditions de courant constant.

**5.** Le procédé selon l'une quelconque des revendications 1 à 4, dans lequel ledit dérivé d'oxyde de phosphine est utilisé dans une quantité de 1 à 50% en masse basée sur ledit solvant organique polaire.

**6.** Le procédé selon l'une quelconque des revendications 1 à 5, dans lequel ledit électrolyte de base est utilisé dans une quantité de 5 à 500% en mole basée sur le dérivé d'oxyde phosphine.

**7.** Le procédé selon l'une quelconque des revendications 1 à 6, dans lequel ladite réaction de réduction électrolytique est réalisée à une température de 0 à 50°C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 62004294 A
- JP 8225468 A
- EP 0548682 A
- US 5792884 A
- WO 2005031040 A2
- IN 2002DE00793
- US 3481988 A
- DE 1247310
- EP 548682 A
- US 3780111 A
- US 4036889 A
- DE 2638720
- JP 53034725 A
- JP 55149293 A
- JP 63026115 B
- JP 55149294 A
- JP 62056879 B
- JP 7076592 A
- US 3405180 A
- EP 0761676 A
- DE 19532310
- WO 2009139436 A


### Non-patent literature cited in the description


- **FRITZSCHE, H. ; HASSERODT, U. ; KORTE, F. ; FRIESE, G ; ADRIAN, K.** *Chem.Ber.,* 1965, vol. 98, 171-174
- **COUMBE, T. ; LAWRENCE, N.J. ; MUHAMMAD, F.** *Tetrahedron Lett.,* 1994, vol. 35, 625-628
- **IMAMOTO, T. ; TAKEYAMA, T. ; KUSUMOTO, T.** *Chem.Lett.,* 1985, 1491-1492
- **ISSLEIB,K. ; GRAMS,G.** *Zeitschrift fur Anorganishe und Allgemeine Chemie,* 1959, vol. 299, 58-68
- **GRIFFIN, S. ; HEATH, L. ; WYATT, P.** *Tetrahedron Lett.,* 1998, vol. 39, 4405-4406
- **MATHEY, F. ; MAILLET, R.** *Tetrahedron Lett.,* 1980, vol. 21, 2525-2526
- **HANDA, Y. ; INANAGA.J. ; YAMAGUCHI, M.** *J.Chem.Soc.;Chem.Comm.,* 1989, 298-299
- **SOMASUNDARAM, N. ; SRINIVASAN, C.** *J.Org.Chem.,* 1996, vol. 61, 2895-2896
- **YANILKIN, V.V ; GROMAKOV, V.S. ; NIGMADZYANOV, F.F.** *Russ., Chem.Bull.,* 1996, vol. 45, 1257-1258
- **LECAT, J.L. ; DEVAUD, M.** *Tetrahedron Lett.,* 1987, vol. 28, 5821-5822
- **IMAMOTO, T. ; KIKUCHI, S. ; MIURA, T. ; WADA, Y.** *Org.Lett.,* 2001, vol. 3, 87-90
- **HORNER, L. ; HOFFMAN, H. ; BECK, P.** *Chem.Ber.,* 1958, vol. 91, 1583-1588
- **MASAKI, M. ; FUKUI, K.** *Chem.Lett.,* 1977, 151-152
- **DENNEY, D.B. ; GROSS, F.J.J.** *Org.Chem.,* 1967, vol. 32, 3710-3711